# EUROPÄISCHE PATENTSCHRIFT

(11) **EP 1 730 222 B1**
(45) Veröffentlichungstag und Bekanntmachung des Hinweises auf die Patenterteilung: **26.05.2010**
(21) Anmeldenummer: 05729585.9
(22) Anmeldetag: 17.03.2005
(51) Int. Cl.: C08J 9/28

(54) **VERFAHREN ZUR HERSTELLUNG VON POLYMERSCHÄUMEN AUF BASIS VON POLYKONDENSATIONS-REAKTIVHARZEN**
METHOD FOR THE PRODUCTION OF POLYMER FOAMS BASED ON REACTIVE POLYCONDENSATION RESINS
PROCEDE DE FABRICATION DE MOUSSES DE POLYMERE A BASE DE RESINES REACTIVES DE POLYCONDENSATION

(30) Priorität: 22.03.2004 DE 102004014287
(43) Veröffentlichungstag der Anmeldung: 13.12.2006
(73) Patentinhaber: BASF SE, 67056 Ludwigshafen (DE)
(72) Erfinder: SCHÄDLER, Volker, F-67000 Strasbourg (FR); SCHMIDT, Daniel, Savannah, GA 31401 (US); WEISS, Axel, 67346 Speyer (DE)
(86) Internationale Anmeldenummer: PCT/EP2005/002845
(87) Internationale Veröffentlichungsnummer: WO 2005/095502

(56) Entgegenhaltungen:
- US-A- 3 779 958
- US-A- 5 556 892
- SALIGER R ET AL: "CARBON AEROGELS FROM DILUTE CATALYSIS OF RESORCINOL WITH FORMALDEHYDE" J. NON-CRYST. SOLIDS, Bd. 221, 1997, Seiten 144-150, XP002334478 in der Anmeldung erwähnt

## Beschreibung

Die Erfindung betrifft ein Verfahren zur Herstellung von Polymerschäumen auf Basis von Polykondensations-Reaktivharzen, mit einem zahlenmittleren Porendurchmesser von maximal 1 µm, durch Gelbildung, umfassend die folgenden Schritte:
1) Herstellen einer gelierbaren Mischung des Polykondensations-Reaktivharzes in einem Lösungs- oder Dispersionsmittel,
2) Herstellen einer wässrigen Dispersion enthaltend Polymerpartikel,
3) Vermischen der Mischung des Polykondensations-Reaktivharzes aus Schritt 1) mit der Dispersion enthaltend Polymerpartikel aus Schritt 2), wobei ein wasserhaltiges Gel entsteht, und
4) Trocknen des wasserhaltigen Gels, wobei der Polymerschaum entsteht,
wobei in Schritt 4) bei einem Druck und einer Temperatur getrocknet wird, die unter dem kritischen Druck und unter der kritischen Temperatur der flüssigen Phase des Gels liegen, und
wobei nach Schritt 3) und vor Schritt 4) das Gel nicht mit einer organischen Flüssigkeit in Kontakt gebracht wird, um das im Gel enthaltene Wasser gegen diese Flüssigkeit auszutauschen.

Weiterhin betrifft die Erfindung die nach dem Verfahren erhältlichen Polymerschäume. Unter einem Schaum soll ein Material verstanden werden, dass bei der vorliegenden Erfindung allerdings nicht durch Verschäumen, sondern auf andere Weise erhalten wird. Schaum bedeutet hier also poröses Material und nicht "erhältlich durch Verschäumen". Insbesondere ist ein Polymerschaum ein Gebilde aus gasgefüllten, kugelod. polyederförmigen Zellen, die durch halbflüssige, hochviskose od. feste Zellstege begrenzt werden. Die Zellstege, verbunden über sog. Knotenpunkte, bilden ein zusammenhängendes Gerüst. Zwischen den Zellstegen spannen sich die Schaumlamellen (geschlossenzelliger Schaum). Werden die Schaumlamellen zerstört oder fließen sie am Ende der Schaumbildung in die Zellstege zurück, erhält man einen offenzelligen Schaum

Nanoporöse Polymerschäume (Schaumstoffe) mit einer Porengröße von deutlich unter 1 µm und einer Gesamtporosität von über 70 % sind aufgrund theoretischer Überlegungen besonders hervorragende Wärmeisolatoren.

Polymerschäume aus Polykondensationsharzen wie Melamin-Formaldehyd-Harzen, oder anderen vernetzten Polymeren können beispielsweise durch einen Sol-Gel-Prozess hergestellt werden. Dabei wird aus dem Polykondensationsharz zunächst ein Sol hergestellt und danach das Sol durch Kondensationsreaktionen zu einem Gel geliert. Um aus dem Gel einen Schaum zu erhalten, muss die Flüssigkeit entfernt werden. Dieser Schritt wird, da die Flüssigkeit meist Wasser ist, nachfolgend vereinfachend als Trocknung bezeichnet.

Es soll hier unter einem Sol eine kolloidale Lösung verstanden werden, in der das feste oder flüssige Polymer feinstverteilt in einem (meist flüssigen) Dispersionsmedium dispergiert ist, und unter einem Gel ein vernetztes System aus einem engmaschig verknüpften Polymer, das in einer Flüssigkeit (sog. Solvogel oder Lyogel, mit Wasser als Flüssigkeit: Aquagel oder Hydrogel) vorliegt. Dabei bildet das Polymer eine kohärente Phase in Form eines kontinuierlichen räumlichen Netzwerks.

Nach den Verfahren des Standes der Technik lässt sich die Flüssigkeit aus dem Gel beispielsweise unter überkritischen Bedingungen bzw. durch überkritische Fluide entfernen, also bei Drucken und Temperaturen oberhalb des kritischen Drucks pₖᵣᵢₜ bzw. der kritischen Temperatur Tₖᵣᵢₜ der Flüssigkeit. Auf diese Weise lassen sich sog. Aerogele (Polymernetzwerk in einem Gas) herstellen

So beschreibt das US-Patent 5 128 382 die Herstellung mikrozellularer Epoxypolymere durch Herstellen einer Polymerlösung, Induzierung einer Phasentrennung und Trocknen oder Extraktion der erhaltene Gele unter überkritischen Bedingungen.

Im US-Patent 5 402 306 werden u.a. Formaldehyd-Harze offenbart, aus denen in einem Sol-Gel-Prozess zunächst ein vernetztes Gel hergestellt wird. Danach wird die im Gel enthaltene Flüssigkeit Wasser durch Lagern des Gels in Aceton gegen Aceton ausgetauscht, das schließlich durch Extraktion und Trocknung mit CO₂ unter überkritischen Bedingungen entfernt wird. Man erhält dabei ein Aerogel.

Pekala et al. beschreiben in J. Non-Cryst. Solids 188, 34-40 (1995) ein ähnliches Verfahren, bei dem ein Phenol-Furfural-Gel hergestellt, die flüssige Phase des Gels (1-Propanol) durch CO₂ ausgetauscht und danach das CO₂ durch überkritisches Trocknen entfernt wird.

Li et al. offenbaren in Carbon 38, 1499-1524 (2000) die Herstellung von Kresol-Formaldehyd-Aerogelen durch Herstellung entsprechender wasserhaltiger Gele, Austausch des im Gel enthaltenen Wassers gegen Aceton, anschließenden Austausch des Acetons gegen CO₂ und überkritisches Trocknen.

Hair et al. beschreiben in J. Vac. Sci. Technol. A, 6 (4), 2559-2563 (1988) die Herstellung von Resorcinol-Formaldehyd-Aerogelen durch Herstellung entsprechender wässriger Gele, Behand lung mit Trifluoressigsäure, Austausch gegen Aceton und anschließenden Austausch des Acetons gegen CO₂ und überkritisches Trocknen.

Die Trocknung unter überkritischen Bedingungen ist apparativ sehr aufwändig, da in geschlossenen Behältern bei definierten Druck- und Temperaturbedingun gen gearbeitet werden muss. Außerdem sind Lösungsmittelwechsel erforderlich. Dies verkompliziert das Verfahren zusätzlich. Eine Trocknung mit überkritischen Fluiden vermindert daher die Wirtschaftlichkeit.

Alternativ kann die Flüssigkeit durch Gefriertrocknen entfernt werden. Allerdings verändert die Flüssigkeit beim Gefrieren ihr Volumen, wodurch das räumliche Polymernetzwerk zerstört wird. Man erhält auf diese Weise keinen Schaum, sondern ein Pulver.

Ein Trocknen unter nicht überkritischen Bedingungen, also bei Drucken und Temperaturen unterhalb pₖᵣᵢₜ und Tₖᵣᵢₜ (nachfolgend als subkritisches Trocknen bezeichnet), wird in der WO 94/22943 beschrieben: Es wird ein Resorcinol-Formaldehyd-Gel hergestellt und in dünne Scheiben geschnitten. Danach wird das im Gel enthaltene Wasser gegen Aceton, und anschließend das Aceton gegen Cyclohexan ausgetauscht. Schließlich lässt man das Cyclohexan bei 20-50°C an der Luft verdunsten. Jedoch ist die Porosität des erhaltenen Schaums gering.

Li et al. offenbaren in Carbon 40, 2955-2959 (2002) die Herstellung von Kresol-Resorcinol-Formaldehyd-Aerogelen aus den entsprechenden wasserhaltigen Gelen, Austausch des Wassers gegen Aceton und Trocken des Gels bei 50°C und Atmosphärendruck.

Saliger et al. beschreiben in J. Non-Cryst. Solids 221, 144-150 (1997) die Herstellung von Resorcinol-Formaldehyd-Aerogelen aus den entsprechenden wasserhaltige Gelen, Austausch des Wassers gegen Aceton und subkritisches Trocknen des Gels bei 50°C.

Demnach muss bei m subkritischen Trocknen das im Gel enthaltene Wasser zunächst in umständlicher und zeitaufwändiger Weise gegen ein leichter flüchtiges, organisches Lösungsmittel ausgetauscht werden. Ggf. sind sogar zwei verschieden Lösungsmittel erforderlich. Erst dieses aus dem Hydrogel erhaltene organische Solvogel kann dann getrocknet werden.

Die ältere, nicht vorveröffentlichte Anmeldung DE Az. 10353745.7 (Anmeldetag 17.11.2003) beschreibt nanoporöse Polymerschaumstoffe, die durch Härten von Mikroemulsionen aus einem wässrigen Polykondensations-Reativharz, einer Ölkomponente und einem Amphiphil erhältlich sind. Dazu müssen Säuren wie Phosphorsäure als Katalysator, und Ammoniumchlorid als Beschleuniger, mitverwendet werden.

Es bestand die Aufgabe, den geschilderten Nachteilen abzuhelfen. Insbesondere sollte ein Verfahren zur Herstellung nanoporöser Polymerschäume mit extrem kleinen Poren bereitgestellt werden, dass sich durch Einfachheit auszeichnet.

Das Verfahren sollte die Trocknung des Polymergels bei geringem Energieverbrauch und hohen Raum-Zeit-Ausbeuten ermöglichen. Insbesondere sollte das Verfahren ohne Verwendung überkritischer Bedingungen bzw. überkritischer Fluide auskommen.

Außerdem sollte es nicht erforderlich sein, das im Gel enthaltene Wasser vor dem Trocknen gegen ein organisches Lösungsmittel auszutauschen.

Besonders vorteilhaft sollten sich mit dem Verfahren Polymerschäume mit einer hohen Porosität herstellen lassen.

Demgemäß wurde das eingangs definierte Verfahren, und die nach dem Verfahren erhältlichen Polymerschäume, gefunden. Bevorzugte Ausführungsformen der Erfindung sind den Unteransprüchen zu entnehmen.

Bei dem erfindungsgemäßen Verfahren werden Polymerschäume auf Basis von Polykondensations-Reaktivharzen (nachfolgend auch kurz als Harze bezeichnet) mit einem mittleren Porendurchmesser von maximal 1 µm, durch Gelbildung hergestellt.

In Schritt 1) des Verfahrens stellt man eine gelierbare Mischung des Polykondensations-Reaktivharzes in einem Lösungs- oder Dispersionsmittel (kurz: Lösungsmittel) her. Eine solche gelierbare Mischung kann beispielsweise eine echte Lösung, ein Sol (kolloidale Lösung) oder eine Dispersion, z.B. eine Emulsion oder Suspension, sein.

Als Polykondensations-Reaktivharz eignen sich beispielsweise Reaktivharze auf Basis von Formaldehyd oder substituierten Formaldehyden wie Furfural. Beispiele sind Harze, deren erste Komponente ausgewählt ist aus Formaldehyd und Furfural, und deren zweite Komponente ausgewählt ist aus Harnstoff, Benzoguanamin, Resorcinol, Catechol, Hydrochinon, Melamin, Phloroglucinol, Anilin und Kresol. Bevorzugt ist das Polykondensations-Reaktivharz wasserlöslich, und besonders bevorzugt handelt es sich um ein Aminoplastharz. Das Aminoplastharz kann unmodifiziert oder modifiziert, beispielsweise mit Alkoholen wie Methanol oder Ethanol verethert, sein.

Insbesondere kann man ein Harnstoff-, Benzoguanamin- oder Melamin-Formaldehyd-Harz verwenden. Ganz besonders bevorzugt wird ein Melamin-Formaldehyd-Harz, beispielsweise ein mit einem Alkohol modifiziertes Melamin-Formaldehyd-Harz mit einem Melamin/Formaldehyd-Verhältnis im Bereich von 1 : 1 bis 1 : 10, bevorzugt 1 : 2 bis 1 : 6, eingesetzt.

Solche Harze sind bekannt und handelsüblich, beispielsweise als Luwipal® 063 von BASF.

Die Wahl des Lösungsmittels richtet sich naturgemäß nach dem verwendetem Harz. Geeignet sind alle Lösungsmittel, die eine gelierbare Mischung ergeben, also eine Gelbildung ermöglichen. Für die bevorzugten wasserlöslichen Harze verwendet man bevorzugt Wasser als Lösungsmittel.

Die gelierbare Mischung bzw. das Sol von Stufe 1) enthält üblicherweise 0,5 bis 15, bevorzugt 1 bis 10 und besonders bevorzugt 2 bis 8 Gew.-% des Polykondensations-Reaktivharzes.

Die Herstellung der gelierbaren Mischung, beispielsweise des Sols, erfolgt in an sich bekannter Weise. Je nach Löslichkeit des Harzes erhält man die Mischung bereits durch Zusammengeben von Harz und Lösungsmittel. Z.B. kann man die bevorzugten wasserlöslichen Melamin-Formaldehyd-Harze einfach bei Raumtemperatur (23°C) mit Wasser verdünnen. Bei geringerer Löslichkeit können Mischvorrichtungen erforderlich sein, beispielsweise Rührer, Hochgeschwindigkeitsrührer, Dispergatoren z.B. mit Rotor-Stator-System, oder Kolloidmühlen. Man kann die Mischung beispielsweise bei Raumtemperatur (20°C) oder darunter oder auch bei bis zu 100°C herstellen, je nach Löslichkeit des Harzes.

In Schritt 2) des Verfahrens stellt man eine wässrige Dispersion her; die Polymerpartikel enthält.

Als Polymerpartikel eignen sich z.B. Partikel auf Basis von Styrolmonomeren (vinylaromatischen Monomeren) wie Styrol, α-Methylstyrol, p-Methylstyrol, Ethylstyrol, tert.-Butylstyrol, Vinylstyrol, Vinyltoluol, 1,2-Diphenylethylen oder 1,1-Diphenylethylen; Partikel auf Basis von Dienen wie 1,3-Butadien (kurz: Butadien), 1,3-Pentadien, 1,3-Hexadien, 2,3-Dimethylbutadien, Isopren oder Piperylen; und Partikel auf Basis von Alkylacrylaten bzw. -methacrylaten mit 1 bis 12 C-Atomen im Alkylrest wie Methylacrylat, n- oder tert.-Butylacrylat oder 2-Ethylhexylacrylat, und die entsprechenden Methacrylate, wie Methylmethacrylat (MMA).

Ebenso sind Polymerpartikel auf Basis von Acrylverbindungen wie Acrylsäure, Acrylamid, Acrylnitril, Methacrylnitril; von acetatgruppenhaltigen Verbindungen wie Vinylacetat; Olefinen wie Ethylen, Propylen; und von Carbonsäuren wie Itaconsäure und Fumarsäure, geeignet. Auch Copolymere wie Ethylen-Vinylacetat-Copolymere sind geeignet. Weitere für die Partikel geeignete Monomere nennt die DE-A 196 33 626 auf Seite 3, Zeilen 5-50 unter M1 bis M10, worauf ausdrücklich verwiesen wird. Ebenfalls in Betracht kommen Polymerpartikel auf Basis von Polyurethanen.

Die Polymerpartikel können Homopolymere oder Copolymere sein, d.h. es sind auch Polymerpartikel aus Mischungen der genannten Monomere geeignet, beispielsweise Partikel aus Styrol-Butadien-Copolymer, das z.B. statistisch oder als Blockcopolymer aufgebaut sein kann, oder aus Styrol-α-Methylstyrol-Copolymer.

Bevorzugt bestehen die Polymerpartikel aus Polymeren auf Basis von Monomeren, die ausgewählt sind aus Styrol, Butadien, Alkylacrylaten und Alkylmethacrylaten. Besonders bevorzugt verwendet man Polystyrolpartikel. Sehr gut geeignet sind z.B. Partikel aus einem Polystyrol, dass Acrylamid und Acrylsäure in Mengen von jeweils 0,1 bis 5 Gew.-%, bezogen auf das Polymer, als Comonomere enthält.

In einer bevorzugten Ausführungsform ist das Verfahren dadurch gekennzeichnet, dass die Polymerpartikel einen mittleren Durchmesser von 20 bis 500, insbesondere 30 bis 400 und besonders bevorzugt 40 bis 300 nm aufweisen.

Der Anteil der Polymerpartikel an der wässrigen Dispersion (Feststoffgehalt) in Stufe 2) beträgt üblicherweise 0,5 bis 70, bevorzugt 5 bis 60 und insbesondere 10 bis 52 Gew.-%.

Eine wässrige Dispersionen von Polymerpartikeln wird auch als Polymerlatex bezeichnet. Solche Latices, z.B. Polystyrol-, Styrol-Butadien-Copolymer-, Polyacrylat- oder Polyurethan-Latices, sind bekannt und können z.B. durch radikalische Polymerisation mittels eines Persulfat-Initiators hergestellt werden, oder sind als fertiger Latex im Handel erhältlich als Acronal®, Styrofan®, Styronal®, Basonal® oder Luhydran®, alle von BASF. Der gewünschte Gehalt an Polymerpartikeln kann ggf. durch Zugabe oder Entfernen von Wasser eingestellt werden.

In einer bevorzugten Ausführungsform enthält die wässrige Dispersion von Stufe 2) ein Tensid, besonders bevorzugt ein ionisches oder nichtionisches Tensid.

Als ionische Tenside sind kationische Tenside zu nennen, beispielsweise quartäre Ammoniumverbindungen mit einer oder zwei hydrophoben Gruppen, und Salze langkettiger primärer Amine, außerdem amphotere Tenside wie N-(Acylamidoalkyl)betaine und Amin-N-oxide. Besonders gut geeignete Tenside sind anionische Tenside, z.B. Seifen, Alkylbenzolsulfonate (ABS), Alkylsulfonate, Alkylsulfate und Alkylethersulfate.

Geeignete nichtionische Tenside sind beispielsweise Fettalkoholethoxylate, Alkylphenolethoxylate, Sorbitanfettsäureester, Alkylpolyglycoside und N-Methylglucamide; außerdem auch Blockcopolymere enthaltend Ethylenoxid und/oder Propylenoxid.

Ganz besonders bevorzugt verwendet man anionische Tenside, beispielsweise Natriumdodecylsulfat.

Der Anteil der Tenside an der Dispersion in Schritt 2) beträgt in der Regel 0 bis 5, bevorzugt 0,3 bis 5, besonders bevorzugt 0,5 bis 3 und insbesondere 0,7 bis 2 Gew.-.%, bezogen auf die Polymerpartikel als solche, d.h. ohne das in der Dispersion enthaltene Wasser.

Es können verschiedene Polymerpartikel bzw. Tenside verwendet werden, und in diesem Fall beziehen sich die Mengenangaben auf die Summe der Partikel bzw. Tenside.

Die Herstellung der wässrigen Dispersion in Schritt 2) erfolgt in üblicher Weise, beispielsweise indem man Wasser, Polymerpartikel und Tensid, ggf. unter Verwendung üblicher Mischvorrichtungen wie Rührer, vermischt, bis die Polymerpartikel gleichmäßig in der wässrigen Phase verteilt sind. Sofern ein fertiger Polymerlatex eingesetzt wird, kann man die Dispersion auch durch einfaches Zugeben des Tensids zum Latex erhalten, falls nicht der fertige Latex bereits ein solches Tensid enthält. Die sonstigen Mischbedingungen sind nicht kritisch, beispielsweise kann man bei Raumtemperatur mischen.

In Schritt 3) des Verfahrens vermischt man die Mischung des Polykondensations-Reaktivharzes aus Schritt 1), mit der Dispersion enthaltend Polymerpartikel aus Schritt 2). Dabei entsteht ein wasserhaltiges Gel.

Das Mischungsverhältnis von gelierbarer Harzmischung aus Schritt 1) und Polymerdispersion aus Schritt 2) kann je nach den gewünschten Eigenschaften des Schaums variieren und hängt naturgemäß auch vom Wasser- bzw. Lösungsmittelgehalt der Komponenten ab.

Bevorzugt werden in Schritt 3) das Polykondensations-Reaktivharz und die Polymerpartikel, ohne Berücksichtigung von Wasser und sonstigen Lösungs- oder Dispersionsmitteln, in einem Mischungsverhältnis von 10 : 1 bis 1 : 10 miteinander vermischt. Insbesondere beträgt dieses Mischungsverhältnis 5 : 1 bis 1 : 5, besonders bevorzugt 3 : 1 bis 1 : 3.

Die in Schritt 3) erhaltene Mischung enthaltend das Harz und die Polymerpartikel weist üblicherweise einen Gesamtfeststoffgehalt von 0,5 bis 25, bevorzugt 1 bis 20 und insbesondere 5 bis 15 Gew.-% auf.

Das Vermischen in Schritt 3) erfolgt auf übliche Weise, z.B. durch Zusamm engeben der Harzmischung aus Schritt 1) und der Polymerdispersion aus Stufe 2). Bevorzugt wird dazu ein Rührer oder eine andere übliche Mischvorrichtung mitverwen det, um eine gute Durchmischung zu erzielen. Die sonstigen Mischbedingungen sind nicht kritisch, beispielsweise kann man bei 0 bis 100°C und 0,1 bis 10 bar (absolut), insbesondere z.B. bei Raumtemperatur und Atmosphärendruck, mischen.

Aus der erhaltenen Mischung entsteht das Gel durch Ruhenlassen, z.B. durch einfaches Stehenlassen des Behälters, in dem sich die Mischung befindet (Gelierbehälter). Bevorzugt wird während der Gelierung (Gelbildung) die Mischung nicht gerührt oder sonstwie durchmischt, weil dies die Ausbildung des Gels behindern könnte- Es hat sich als vorteilhaft erwiesen, die Mischung während des Gelierens abzudecken bzw. den Gelierbehälter zu verschließen.

Die Dauer des Gelierens variiert je nach Art und Menge der eingesetzten Komponenten und kann mehrere Tage betragen. Üblicherweise beträgt sie 1 Minute bis 10 Tage, bevorzugt eine Stunde bis 5 Tage, insbesondere etwa 4 Tage. Üblicherweise verkürzt eine höhere Geliertemperatur die Gelierdauer.

Temperatur und Druck beim Gelieren können beispielsweise 0 bis 150, bevorzugt 15 bis 100 und besonders bevorzugt 15 bis 70°C, bzw. 0,1 bis 100, bevorzugt 0,5 bis 10 und insbesondere 0,9 bis 5 bar (absolut), betragen. Insbesondere kann man wässrige Mischungen z.B. bei Raumtemperatur und Atmosphärendruck, gelieren lassen.

Während des Gelierens erstarrt die Mischung zu einem mehr oder weniger formbeständigen Gel. Daher kann man die Gelbildung in einfacher Weise daran erkennen, dass sich der Inhalt des Gelierbehälters nicht mehr bewegt, wenn der Behälter langsam schräggestellt wird. Außerdem ändern sich bei der Gelierung die akustischen Eigenschaften der Mischung: die gelierte Mischung ergibt beim Klopfen auf die äußere Wand des Behälters einen anderen, brummenden Klang als die noch nicht gelierte Mischung (sog. Brummgel).

Bevorzugt sind für die Gelierung keine anorganischen oder organischen Säuren wie Salzsäure, Phosphorsäure, Essigsäure, Ameisensäure, p-Toluolsulfonsäure, p-Dodecylbenzolsulfonsäure oder sonstige Säuren als Katalysator erforderlich. Auch Salze wie Ammoniumchlorid, die die Gelierung beschleunigen, müssen bevorzugt nicht mitverwendet werden.

In einer bevorzugten Ausführungsform wird das bei der Gelierung in Schritt 3) erhaltene Gel vor Schritt 4) noch einer sog. Alterung unterworfen, bei der sich die Ausbildung des Gels vervollständigt. Die Alterung erfolgt beispielsweise dadurch, dass man das Gel einige Zeit einer höheren Temperatur aussetzt als bei der vorangegangenen Gelierung. Dazu kann man z.B. ein Temperierbad oder einen Wärmeschrank verwenden.

Im Allgemeinen altert man bei Temperaturen von 30 bis 150, bevorzugt 40 bis 100°C, und die Alterungs-Temperatur sollte etwa 10 bis 130, insbesondere 20 bis 80°C über der Gelier-Temperatur liegen. Wurde bei Raumtemperatur geliert, so kann man z.B. bei 40 bis 80°C, bevorzugt etwa 60°C altern. Der Druck bei der Alterung ist unkritisch und beträgt üblicherweise 0,9 bis 5 bar (absolut). Die Dauer der Alterung beträgt üblicherweise 10 min bis 30 Tage, bevorzugt 20 min bis 20 Tage und besonders bevorzugt 30 min bis 5 Tage. Je nach Art und Zusammensetzung kann das Gel während der Alterung geringfügig schrumpfen und sich dabei von der Wandung des Gelierbehälters ablösen. Vorteilhaft deckt man das Gel während der Alterung ab bzw. verschließt den Behälter.

Erfindungsgemäß bringt man nach Schritt 3) und vor Schritt 4) das Gel nicht mit einer organischen Flüssigkeit in Kontakt, um das im Gel enthaltene Wasser gegen diese Flüssigkeit auszutauschen. Dies gilt unabhängig davon, ob das Gel gealtert wird oder nicht.

Solche - hier nicht erforderlichen - organischen Flüssigkeiten wären beispielsweise leichtflüchtige organische Verbindungen wie Ketone wie Aceton, Alkane wie Cyclohexan, Alkohole oder Ether mit z.B. 1 bis 10 C-Atomen. Sie sind in den Verfahren des Standes der Technik erforderlich, um das im Gel enthaltene Wasser aus den Hohlräumen des Gels zu verdrängen. Bei diesen bekannten Verfahren wird das wasserhaltige Gel mehrere Stunden oder Tage in der organischen Flüssigkeit, die ggf. mehrmals gegen frische Flüssigkeit ausgetauscht werden muss, gelagert.

Dieser Austausch des im Gel enthaltenen Wassers gegen Aceton oder eine andere organische Flüssigkeit ist erfindungsgemäß gerade nicht erforderlich, d. h. das Gel wird erfindungsgemäß nicht mit Aceton etc. behandelt. Dies vereinfacht das erfindungsgemäße Verfahren und macht es kostengünstiger.

In Schritt 4) des erfindungsgemäßen Verfahrens trocknet man das wasserhaltige Gel. Dabei entsteht als Verfahrensprodukt der Polymerschaum. Erfindungsgemäß trocknet man bei einem Druck und einer Temperatur, die unter dem kritischen Druck und unter der kritischen Temperatur der flüssigen Phase des Gels liegen.

Die flüssige Phase des Gels enthält im Wesentlichen das Lösungsmittel der Harzmischung aus Schritt 1), beispielsweise Wasser, und das Wasser der wässrigen Polymerdispersion aus Stufe 2). Trocknen bedeutet das Entfernen dieser flüssigen Phase.

Zum Trocknen des Gels öffnet man den Gelierbehälter und hält solange unter den genannten Druck- und Temperaturbedingungen, bis die flüssige Phase durch Übergang in den gasförmigen Zustand entfernt ist, d.h. man verdunstet (verdampft) die flüssige Phase. Um das Verdunsten zu beschleunigen, ist es vorteilhaft, das Gel aus dem Behälter zu entfernen. Auf diese Weise wird die Phasengrenzfläche Gel/Umgebungsluft, worüber die Verdunstung stattfindet, vergrößert. Beispielsweise kann man das Gel zum Trocknen auf eine ebene Unterlage oder ein Sieb geben.

Man kann das Gel an der Luft, oder falls es sauerstoffempfindlich ist, auch an anderen Gasen wie Stickstoff oder Edelgasen trocknen, und dazu ggf. einen Trockenschrank oder andere geeignete Vorrichtungen verwenden.

Die beim Trocknen zu wählenden Temperatur- und Druckbedingungen hängen von der flüssigen Phase ab. Erfindungsgemäß wird bei einem Druck getrocknet, der unter dem kritischen Druck pₖᵣᵢₜ der flüssigen Phase liegt, und bei einer Temperatur getrocknet, die unter der kritischen Temperatur Tₖᵣᵢₜ der flüssigen Phase liegt. Man trocknet demnach unter subkritischen Bedingungen.

Dabei bedeutet kritisch: beim kritischen Druck und der kritischen Temperatur ist die Dichte des flüssigen Phase gleich der Dichte der Gasphase (sog. kritische Dichte), und bei Temperaturen oberhalb Tₖᵣᵢₜ lässt sich das Gas auch bei Anwendung höchster Drucke nicht mehr verflüssigen. Für die bevorzugte flüssige Phase Wasser beträgt Tₖᵣᵢₜ 374°C und pₖᵣᵢₜ 221,29 bar, für CO₂ beträgt Tₖᵣᵢₜ 31,06°C und pₖᵣᵢₜ 73,825 bar (absolut).

Üblicherweise trocknet man das wasserhaltige Gel bei Temperaturen von 0 bis 150, bevorzugt 10 bis 120 und besonders bevorzugt 15 bis 100°C, und bei Drucken von Hochvakuum (10⁻⁷ mbar) bis 300 bar, bevorzugt 1 mbar bis 10 bar und insbesondere 10 mbar bis 5 bar (absolut). Beispielsweise kann man bei Atmosphärendruck und 0 bis 80°C, insbesondere bei Raumtemperatur, trocknen.

Besonders bevorzugt trocknet man in Schritt 4) das Gel bei einem Druck von 0,5 bis 2 bar absolut, und bei einer Temperatur von 0 bis 100°C.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Wassers zunächst bei Raumtemperatur und Atmosphärendruck innerhalb von z.B. 8 bis 12 Tagen entfernen, und danach bei 40 bis 80°C unter einem Vakuum von z.B. 1 bis 100, insbesondere 10 bis 30 mbar, das restliche Wasser innerhalb von 1 bis 5 Tagen entfernen.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. entlang eines Druck- bzw. Temperaturprogramms trocknen.

Naturgemäß trocknet das Gel umso schneller, je geringer der Feuchtigkeitsgehalt der Luft ist. Gleiches gilt sinngemäß für andere flüssige Phasen als Wasser und andere Gase als Luft.

Beim Trocknen in Stufe 4) wird die flüssige Phase in der Regel vollständig oder bis auf einen Restgehalt von 0,01 bis 1 Gew.-%, bezogen auf den erhaltenen Polymerschaum, entfernt.

Mit dem erfindungsgemäßen Verfahren erhält man einen Polymerschaum mit einem mittleren Porendurchmesser von maximal 1 µm. Bevorzugt beträgt der mittlere Porendurchmesser 10 nm bis 1 µm, besonders bevorzugt 100 nm bis 500 nm.

Bevorzugt weist der Schaum eine Porosität von mindestens 70 Vol.-%, insbesondere mindestens 90 Vol.-% auf, d.h. mindestens 70 % bzw. 90 % des Schaumvolumens bestehen aus Poren. Die Porosität kann z.B. in einem Porosimeter durch Quecksilber-Intrusionsmessung ermittelt werden. Dabei wird Quecksilber in eine Probe des Schaums gepresst. Kleine Poren erfordern einen höheren Druck, um mit Hg gefüllt zu werden als große Poren, und aus dem entsprechenden Druck/Volumen-Diagramm kann man eine Porengrößenverteilung bestimmen.

Die Dichte des Polymerschaums beträgt üblicherweise 20 bis 300, bevorzugt 30 bis 200 und besonders bevorzugt 40 bis 100 g/l.

Das erfindungsgemäße Verfahren ergibt einen zusammenhängenden Schaum und nicht nur ein Polymerpulver oder -partikel. Dabei wird die räumliche Form des Schaums durch die Form des Gels bestimmt, die wiederum durch die Form des Gelierbehälters bestimmt wird. So ergibt beispielsweise ein zylindrischer Gelierbehälter üblicherweise ein annähernd zylinderförmiges Gel, dass dann zu einem Schaum in Zylinderform getrocknet wird.

Gegenstand der Erfindung ist demnach auch der nach dem erfindungsgemäßen Verfahren erhältliche Polymerschaum.

Das gefundene Verfahren ist unkompliziert und liefert nanoporöse Polymerschäume mit extrem kleinen Poren und einer sehr hohen Porosität. Insbesondere wegen des einfachen Trocknens bei subkritischen Bedingungen benötigt das Verfahren weniger Energie und ermöglicht hohe Raum-Zeit-Ausbeuten. Es kommt ohne überkritische Bedingungen bzw. überkritische Fluide aus, und außerdem werden keine organischen Flüssigkeiten zum Austausch des im Gel enthaltenen Wassers benötigt. Daher ist das gefundene Verfahren apparativ einfacher und mit weniger Einsatzstoffen zu betreiben, und letztlich kostengünstiger.

### Beispiel:

Als Polykondensations-Reaktivharz wurde ein mit Methanol verethertes Melamin-Formaldehyd-Harz als 70 gew.-%ige Lösung in Wasser eingesetzt. Das Molverhältnis Melamin : Formaldehyd : Methanol betrug 1 : 3,6 : 2.

Als Polymerdispersion wurde ein Polystyrol-Latex (wässrige Dispersion von Polystyrolpartikeln, erhalten in üblicher Weise durch radikalische Polymerisation mittels Natriumpersulfat als Initiator) verwendet. Der mittlere Teilchendurchmesser betrug 119 nm, und das Polystyrol enthielt 97 Gew.-% Styrol, 1,5 Gew.-% Acrylamid und 1,5 Gew.-% Acrylsäure. Der Latex enthielt als anionisches Tensid 1 Gew.-%Natriumdodecylsulfat, und der Feststoffgehalt des Latex betrug 48,4 Gew.-%.

### Beispiel 1:

2,14 g der 70 gew.-%igen wässrigen Lösung des Melamin-Formaldehyd-Harzes wurden bei 20°C unter Rühren mit 25,4 ml Wasser verdünnt. Man erhielt eine klare, 5,5 gew.-%ige Lösung, zu der anschließend bei 20°C unter Rühren 3,1 g des Polystyrol-Latex gegeben wurden. Die erhaltene Mischung war milchigweiß und hatte einen Gesamtfeststoffgehalt von 10 Gew.-%. Das Gewichtsverhältnis von Melamin-Formaldehyd-Harz zu Polystyrolpartikeln in der Mischung betrug ohne Berücksichtigung des Wassers 1 : 1.

Das Gefäß wurde verschlossen und zum Gelieren ohne Rühren bei 20°C stehen gelassen. Nach 4 Tagen hatte sich ein weißes Gel gebildet, erkennbar u.a. am veränderten, brummenden Klang beim Klopfen auf die äußere Gefäßwand.

Anschließend wurde das Gel einer Alterung unterworfen, indem man das verschlossene Gefäß in einem Wasserbad 12 Tage auf 60°C temperierte. Dabei schrumpfte das Gel geringfügig und löste sich von der Gefäßwand ab.

Schließlich überführte man das gealterte Gel aus dem Gefäß auf eine Glasplatte und trocknete es zunächst 10 Tage an der Luft bei 20°C und Atmosphärendruck, und danach 3 Tage in einem Trockenschrank bei 60°C, bis der Druck im Schrank etwa 20 mbar betrug.

Man erhielt einen feinzelligen Polymerschaum. Durch eine Quecksilber-Intrusionsmessung wurde die Porosität und die Verteilung der Porengrößen bestimmt. Die Gesamtporosität betrug 71 Vol.-%, und Tabelle 1 gibt die Porengrößenverteilung an.

**Tabelle 1: Porengrößenverteilung**

| Porengröße | Vol.-% |
|---|---|
| 10 bis ≤ 50nm | 6,66 |
| 50 bis ≤ 100 nm | 30,58 |
| 100 bis ≤ 500 nm | 41,10 |
| 500 bis ≤ 1000 nm | 9,79 |
| 1 bis ≤ 5 µm | 7,66 |
| 5 bis ≤ 10 µm | 1,11 |
| 10 bis ≤ 50 µm | 1,17 |
| 50 bis ≤ 100 µm | 0,46 |
| 100 bis ≤ 300 µm | 1,47 |

Demnach waren 88 Vol.-% der Poren kleiner oder gleich 1 µm. Der zahlenmittlere Porendurchmesser betrug 160 nm.

Das Beispiel zeigt, dass sich mit dem erfindungsgemäßen Verfahren auf einfache Weise und ohne übliches Verschäumen ein nanoporöser Schaum mit einer hohen Porosität herstellen ließ.

### Beispiel 2:

Beispiel 1 wurde wiederholt, jedoch wurde die Gelierung statt bei 20°C bei 80°C vorgenommen. Dadurch verkürzte sich die Dauer der Gelierung auf 4 Stunden.

### Beispiel 3V zum Vergleich: ohne Polystyrol-Latex

Beispiel 1 wurde wiederholt, jedoch wurde kein Polystyrol-Latex zugefügt. Es trat keine Gelierung ein.

### Beispiele 4V bis 8V zum Vergleich: mit Säure und NH₄Cl statt Polystyrol-Latex

4 g der 70 gew.-%igen wässrigen Lösung des Melamin-Formaldehyd-Harzes wurden bei 20°C unter Rühren mit 11 g Wasser verdünnt. Man erhielt eine klare, 20 gew.-%ige Lösung, zu der anschließend bei 20°C unter intensivem Rühren die in Tabelle 2 genannte Menge an Ammoniumchlorid gegeben und vollständig gelöst wurde. Danach wurde die Mischung mit konz. Salzsäure auf einen pH-Wert von etwa 4 angesäuert.

Das Gefäß wurde verschlossen und zum Gelieren ohne Rühren bei 20°C stehen gelassen. Nach der in Tabelle 2 angegebenen Zeit hatte sich ein Gel (Aussehen siehe Tabelle 2) gebildet, erkennbar am veränderten Klang beim Klopfen auf die äußere Gefäßwand.

Danach überführte man das Gel aus dem Gefäß auf eine Glasplatte und trocknete es zunächst 10 Tage an der Luft bei 20°C und Atmosphärendruck, und danach 3 Tage in einem Trockenschrank bei 60°C, bis der Druck im Schrank etwa 20 mbar betrug.

Durch Dichtebestimmung des Schaums und Vergleich mit der Dichte des nicht geschäumten Melamin-Formaldehyd-Harzes wurde die Porosität berechnet. Sie ist in Tabelle 2 angegeben.

**Tabelle 2: Vergleichsbeispiele**

| Beispiel | 4V | 5V | 6V | 7V | 8V |
|---|---|---|---|---|---|
| Menge | 0,14 | 0,28 | 0,42 | 0,56 | 0,70 |
| NH₄Cl [g] | | | | | |
| Gelierzeit | 23 | 20 | 18 | 16 | 14 |
| [min] | | | | | |
| Aussehen des Gels | blaustichig, halbtranspar. | farblos, transluzent | farblos, opak | farblos, opak | farblos, opak |
| Porosität | 0 | 0 | 74 | 83 | 83 |
| [Vol.-%] | | | | | |
| Bemerkung | kein Schaum | kein Schaum | Makroporen | große Makroporen | große Makroporen |

Das Polymer der Vergleichsbeispiele 4V und 5V wies eine Porosität von 0 Vol.-% auf, war also kein Schaum. In den Vergleichsbeispielen 6V bis 8V wurde zwar ein Schaum erhalten, jedoch war er makroporös.

## Patentansprüche

1. Verfahren zur Herstellung von Polymerschäumen auf Basis von Polykondensations-Reaktivharzen, mit einem zahlenmittleren Porendurchmesser von maximal 1 µm, durch Gelbildung, umfassend die folgenden Schritte:
1) Herstellen einer gelierbaren Mischung des Polykondensations-Reaktivharzes in einem Lösungs- oder Dispersionsmittel,
2) Herstellen einer wässrigen Dispersion enthaltend Polymerpartikel,
3) Vermischen der Mischung des Polykondensations-Reaktivharzes aus Schritt 1) mit der Dispersion enthaltend Polymerpartikel aus Schritt 2), wobei ein wasserhaltiges Gel entsteht, und
4) Trocknen des wasserhaltigen Gels, wobei der Polymerschaum entsteht,
wobei in Schritt 4) bei einem Druck und einer Temperatur getrocknet wird, die unter dem kritischen Druck und unter der kritischen Temperatur der flüssigen Phase des Gels liegen, und
wobei nach Schritt 3) und vor Schritt 4) das Gel nicht mit einer organischen Flüssigkeit in Kontakt gebracht wird, um das im Gel enthaltene Wasser gegen diese Flüssigkeit auszutauschen.

2. Verfahren nach Anspruch 1, **dadurch gekennzeichnet, dass** die Polymerpartikel einen mittleren Durchmesser von 20 bis 500 nm aufweisen.

3. Verfahren nach den Ansprüchen 1 bis 2, **dadurch gekennzeichnet, dass** das Polykondensations-Reaktivharz ein Aminoplastharz ist.

4. Verfahren nach den Ansprüchen 1 bis 3, **dadurch gekennzeichnet, dass** das Aminoplastharz ein Melamin-Formaldehyd-Harz ist.

5. Verfahren nach den Ansprüchen 1 bis 4, **dadurch gekennzeichnet, dass** die Polymerpartikel aus Polymeren auf Basis von Monomeren ausgewählt aus Styrol, Butadien, Alkylacrylaten und Alkylmethacrylaten, bestehen.

6. Verfahren nach den Ansprüchen 1 bis 5, **dadurch gekennzeichnet, dass** die Dispersion aus Schritt 2) ein ionisches oder nichtionisches Tensid enthält.

7. Verfahren nach den Ansprüchen 1 bis 6, **dadurch gekennzeichnet, dass** das in Schritt 3) erhaltene Gel vor Schritt 4) einer Alterung unterworfen wird.

8. Verfahren nach den Ansprüchen 1 bis 7, **dadurch gekennzeichnet, dass** in Schritt 3) das Polykondensations-Reaktivharz und die Polymerpartikel, ohne Berücksichtigung von Wasser und sonstigen Lösungs- oder Dispersionsmitteln, in einem Mischungsverhältnis von 10 : 1 bis 1 : 10 miteinander vermischt werden.

9. Verfahren nach den Ansprüchen 1 bis 8, **dadurch gekennzeichnet, dass** das Trocknen in Schritt 4) bei einem Druck von 0,5 bis 2 bar absolut, und einer Temperatur von 0 bis 100°C, erfolgt.

10. Verfahren nach den Ansprüchen 1 bis 9, **dadurch gekennzeichnet, dass** der Polymerschaum eine Porosität von mindestens 70 Vol.-% aufweist.

11. Polymerschäume, erhältlich nach dem Verfahren gemäß den Ansprüchen 1 bis 10.

## Claims

1. A process for producing polymer foams which are based on reactive polycondensation resins and have a number average pore diameter of not more than 1 µm by gel formation, which comprises the following steps:
1) preparing a gelable mixture of the reactive polycondensation resin in a solvent or dispersion medium,
2) preparing an aqueous dispersion comprising polymer particles,
3) mixing the mixture of the reactive polycondensation resin from step 1) with the dispersion comprising polymer particles from step 2) to give a water-containing gel, and
4) drying the water-containing gel to give the polymer foam,
with drying in step 4) being carried out at a pressure and a temperature which are below the critical pressure and below the critical temperature of the liquid phase of the gel and
the gel not being brought into contact with an organic liquid to replace the water present in the gel by this liquid after step 3) and before step 4) .

2. The process according to claim 1, wherein the polymer particles have a mean diameter of from 20 to 500 nm.

3. The process according to claim 1 or 2, wherein the reactive polycondensation resin is an amino resin.

4. The process according to any of claims 1 to 3, wherein the amino resin is a melamine-formaldehyde resin.

5. The process according to any of claims 1 to 4, wherein the polymer particles comprise polymers based on monomers selected from among styrene, butadiene, alkyl acrylates and alkyl methacrylates.

6. The process according to any of claims 1 to 5, wherein the dispersion from step 2) comprises an ionic or nonionic surfactant.

7. The process according to any of claims 1 to 6, wherein the gel obtained in step 3) is subjected to aging before step 4).

8. The process according to any of claims 1 to 7, wherein the reactive polycondensation resin and the polymer particles are mixed with one another in a mixing ratio of from 10:1 to 1:10, disregarding water and other solvents or dispersion media, in step 3).

9. The process according to any of claims 1 to 8, wherein drying in step 4) is carried out at a pressure of from 0.5 to 2 bar absolute and a temperature of from 0 to 100°C.

10. The process according to any of claims 1 to 9, wherein the polymer foam has a porosity of at least 70% by volume.

11. A polymer foam obtainable by the process according to any of claims 1 to 10.

## Revendications

1. Procédé pour la production de mousses de polymères à base de résines réactives de polycondensation, ayant un diamètre de pores en moyenne en nombre d'au maximum 1 µm, par gélification, comprenant les étapes suivantes :
1) préparation d'un mélange gélifiable de 1a résine réactive de polycondensation dans un solvant ou dispersant,
2) préparation d'une dispersion aqueuse contenant des particules de polymère,
3) mélange du mélange de la résine réactive de polycondensation provenant de l'étape 1) avec la dispersion contenant des particules de polymère, provenant de l'étape 2), de sorte qu'il en résulte un gel contenant de l'eau, et
4) séchage du gel contenant de l'eau, pour l'obtention de la mousse de polymère,
le séchage dans l'étape 4) étant effectué sous une pression et à une température qui se situent au-dessous de la pression critique et au-dessous de la température critique de la phase liquide du gel, et
après l'étape 3) et avant l'étape 4) le gel n'étant pas mis en contact avec un liquide organique pour l'échange de l'eau contenue dans le gel contre ce liquide.

2. Procédé selon la revendication 1, **caractérisé en ce que** les particules de polymère ont un diamètre moyen de 20 à 500 nm.

3. Procédé selon les revendications 1 et 2, **caractérisé en ce que** la résine réactive de polycondensation est un aminoplaste.

4. Procédé selon les revendications 1 à 3, **caractérisé en ce que** l'aminoplaste est une résine mélamine-formaldéhyde.

5. Procédé selon les revendications 1 à 4, **caractérisé en ce que** les particules de polymères sont constituées de polymères à base de monomères choisis parmi le styrène, le butadiène, des acrylates d'alkyle et des méthacrylates d'alkyle.

6. Procédé selon les revendications 1 à 5, **caractérisé en ce que** la dispersion provenant de l'étape 2) contient un tensioactif ionique ou non ionique.

7. Procédé selon les revendications 1 à 6, **caractérisé en ce que** le gel obtenu dans l'étape 3) est soumis à un vieillissement avant l'étape 4).

8. Procédé selon les revendications 1 à 7, **caractérisé en ce que** dans l'étape 3) la résine réactive de polycondensation et les particules de polymères sont mélangés entre elles en un rapport de mélange de 10:1 à 1:10, sans tenir compte de l'eau et des autres solvants ou dispersants.

9. Procédé selon les revendications 1 à 8, **caractérisé en ce que** le séchage dans l'étape 4) s'effectue sous une pression absolue de 0,5 à 2 bars, et à une température de 0 à 100 °C.

10. Procédé selon les revendications 1 à 9 **caractérisé en ce que** la mousse de polymère a une porosité d'au moins 70 % en volume.

11. Mousses de polymères, pouvant être obtenues conformément au procédé selon les revendications 1 à 10.
